# FASCICULE DE BREVET EUROPEEN

(11) **EP 0 636 334 B1**
(45) Date de publication et mention de la délivrance du brevet: **05.03.1997**
(21) Numéro de dépôt: 94450005.7
(22) Date de dépôt: 01.08.1994
(51) Int. Cl.: A47J 37/12, G07F 9/10

(54) **Appareil distributeur de frites a pré-paiement**
Durch Bezahlung aktivierte Pommes-Frites-Abgabevorrichtung
Payment activated french fries dispensing machine

(30) Priorité: 30.07.1993 FR 9309640
(43) Date de publication de la demande: 01.02.1995
(73) Titulaire: ETABLISSEMENTS R. KOHL, Société Anonyme, F-62100 Calais (FR)
(72) Inventeur: Kelle, Raymond, F-62100 Calais (FR)
(74) Mandataire: Thébault, Jean-Louis

(56) Documents cités:
- WO-A-91/15144
- WO-A-93/07793
- FR-A- 2 597 319
- FR-A- 2 672 409
- US-A- 3 160 255
- US-A- 3 448 677
- US-A- 3 690 247
- US-A- 3 870 193
- US-A- 5 174 470

## Description

La présente invention a trait à un appareil capable de stocker des frites pré-cuites et de les distribuer après achèvement de cuisson, automatiquement, en quantités prédéterminées délivrées dans des récipients appropriés, sous la commande d'un monnayeur.

On connaît déjà divers appareils de distribution de produits alimentaires chauffés. On peut citer par exemple les documents WO 91/15144 et FR-A-2 672 409. Ce dernier document, servant de base pour le préambule de la revendication indépendante 1, a trait à un appareil distributeur de frites comportant une chaîne de pesage-chauffage-évacuation à panier de cuisson basculant plongeant en partie inférieure dans un bain d'huile de cuisson. US-A-3,448,677 et FR-A-2 597 319 divulguent aussi des appareils selon le préambule de la revendication 1.

L'ensemble de la chaîne est complexe et génère de nombreux inconvénients du fait notamment du mode de chauffage des frites par immersion dans un bain d'huile.

Le but de l'invention est de simplifier, dans un appareil de distribution de portions de frites, une telle chaîne de pesage-cuisson-évacuation, en la rendant substantiellement moins polluante, plus sûre, simple et fiable de fonctionnement et d'un entretien beaucoup plus facile et réduit.

A cet effet, l'invention a pour objet un appareil distributeur de frites à pré-paiement, constitué d'une enceinte munie d'une trappe d'accès à une zone de délivrance d'un récipient et dans laquelle sont agencés :
- une trémie de stockage à température appropriée de frites pré-cuites congelées munie d'un dispositif d'évacuation des frites hors de la trémie ;
- un dispositif de pesage de portions déterminées de frites ;
- des moyens de transfert de la quantité pesée par ledit dispositif de pesage en direction d'un ensemble de cuisson ;
- une goulotte acheminant les frites cuites depuis ledit ensemble de cuisson jusqu'à ladite zone de délivrance ;
- un dispositif de stockage-distribution un à un de récipients ladite zone de délivrance ;
- un système monnayeur de déclenchement d'un cycle de fonctionnement de l'appareil, et
- un dispositif de programmation activé par le monnayeur et commandant, contrôlant et synchronisant les diverses étapes dudit cycle,
caractérisé en ce que
- d'une part, lesdits moyens de pesage et de transfert des frites vers ledit ensemble de cuisson au poste de chargement, sont constitués par un bac monté en bascule sous le rappel d'un contre-poids réglable en position et par un montage escamotable du fond dudit bac, commandé par un dispositif approprié à partir d'un signal fourni par un micro-interrupteur de fin de course de basculement dudit bac et,
- d'autre part, ledit ensemble de cuisson est mobile en translation entre une première position de chargement des frites, une seconde position de cuisson en dessous d'un poste de cuisson comportant une ou plusieurs lampes halogènes ou analogues, équipées de réflecteurs et une troisième position de déchargement des frites.

Avantageusement, l'ensemble de cuisson est muni d'un dispositif vibrateur provoquant pendant la cuisson le retournement et déplacement des frites assurant une cuisson homogène.

De même, le poste de cuisson est de préférence équipé d'un groupe d'extraction des fumées de cuisson, de leur filtration et de leur rejet à l'extérieur.

Par ailleurs, parallèlement à la distribution d'une portion de frites, l'appareil peut délivrer divers accessoires et/ou condiments tels que fourchette, serviette, sel, moutarde, sauce, etc..., pré-conditionnés et stockés dans l'appareil.

D'autres caractéristiques et avantages ressortiront de la description qui va suivre d'un mode de réalisation d'un appareil selon l'invention, description donnée à titre d'exemple uniquement et en regard des dessins annexés sur lesquels :
- Figure 1 est une vue générale en perspective d'un appareil distributeur de frites selon l'invention ;
- Figure 2 est une vue en élévation latérale de gauche de l'appareil de la figure 1, la paroi étant enlevée ;
- Figure 3 est une vue de la face interne de la porte frontale de l'appareil ;
- Figure 4 est une vue de l'intérieur de l'appareil, la porte étant ouverte ;
- Figure 5 est une vue de dessus du poste de cuisson ;
- Figure 6 est une vue en élévation, côté porte, du poste de cuisson ;
- Figure 7a est une vue en élévation latérale de la trémie de stockage des frites et du dispositif de pesage et délivrance d'une portion de frites ;
- Figures 7b à 7d illustrent plusieurs positions du dispositif de pesée-délivrance au cours de son fonctionnement, et
- Figures 8a à 8c illustrent en élévation latérale les trois positions de l'ensemble de cuisson, respectivement au poste de chargement, au poste de cuisson et au poste de déchargement.

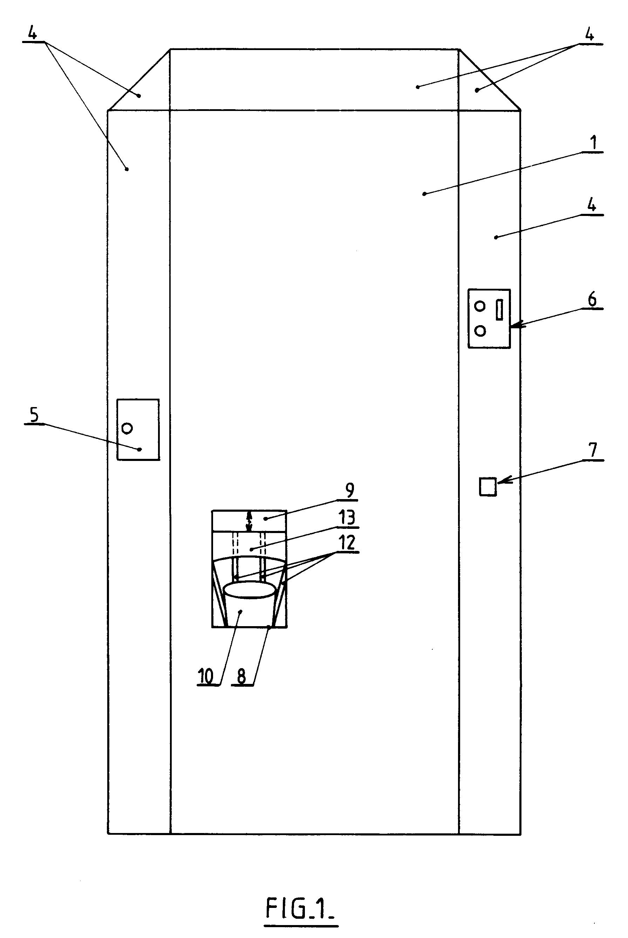

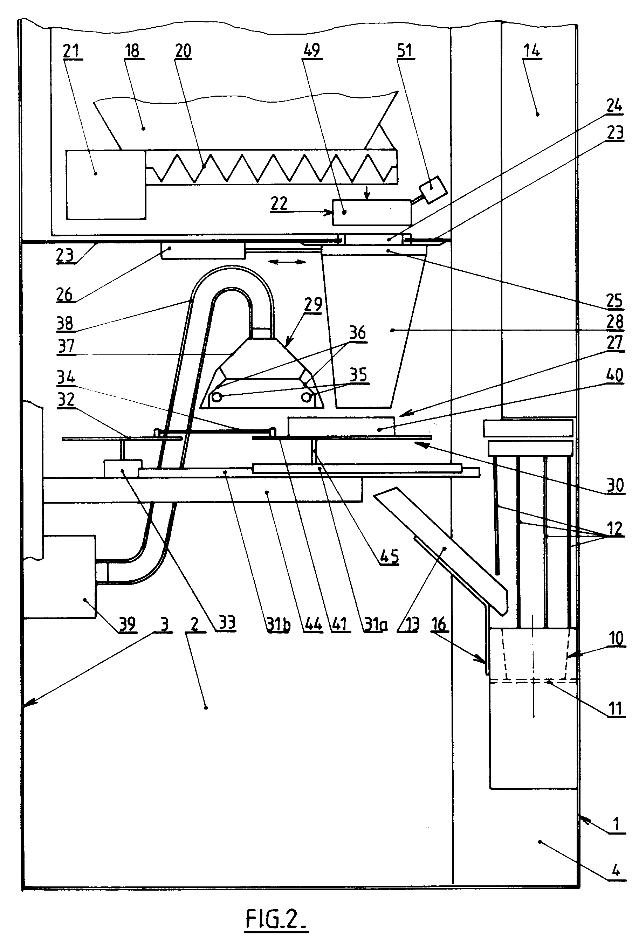

Sur la figure 1 on a représenté schématiquement la face avant d'un appareil selon l'invention, constituée par une porte 1 d'une armoire métallique de forme générale parallélépipèdique dont les façades latérales 2 et la paroi de fond 3 sont représentées symboliquement seulement sur les figures 2 à 6.

La façade avant, presque toute entière occupée par la porte 1, comporte sur son pourtour des pans coupés 4 de chaque côté de la porte et au-dessus et présente une serrure 5 de verrouillage de la porte, un dispositif à monnayeur 6 et son réceptacle 7 de retour des pièces, ainsi qu'un orifice rectangulaire 8 susceptible d'être obturé par une trappe 9 mobile verticalement, d'accès à une zone de délivrance d'un récipient tel qu'un gobelet 10 garni de frites, reposant sur une plaque horizontale 11 (représentée en figure 2) en étant calé latéralement par des tiges de guidage 12. En 13 est représentée l'extrémité inférieure de la goulotte de chargement des frites dans le gobelet 10.

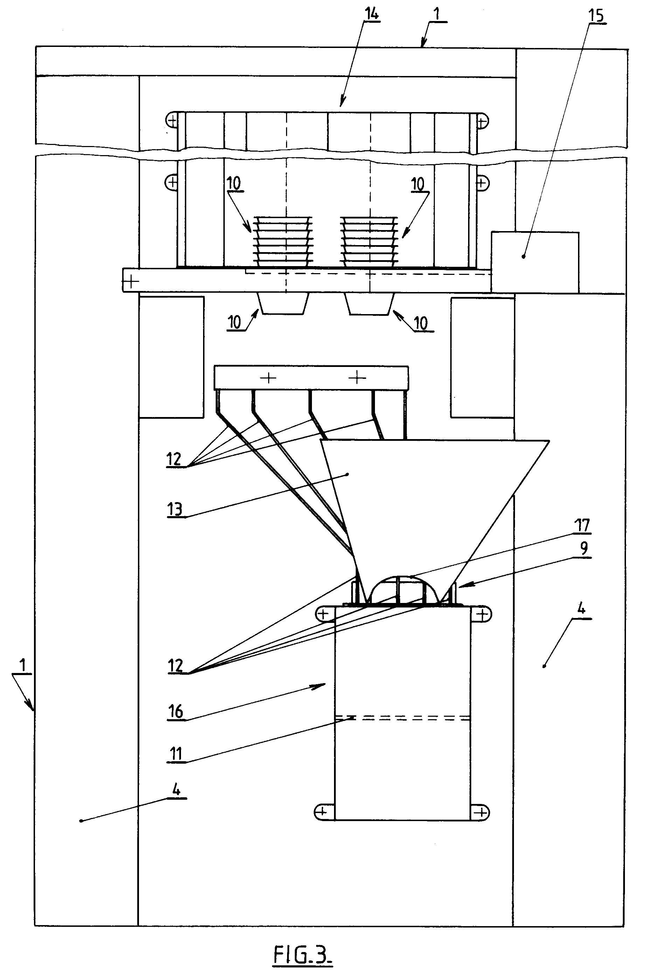

La figure 3 représente la face interne de la porte 1 ouverte avec les organes et sous-ensembles qu'elle porte et qui comprennent un magasin 14 de stockage de gobelets 10 vides, gerbés suivant deux empilements verticaux parallèles. Les gobelets 10 sont délivrés un à un à la manière connue, chaque gobelet étant prélevé alternativement dans une pile puis dans l'autre. Les gobelets libérés par un mécanisme conventionnel approprié symbolisé en 15, tombent sur des glissières constituées par des tiges métalliques 12 canalisant les gobelets vers la zone de délivrance des gobelets garnis de frites, matérialisée en 16 au droit de la trappe d'accès 9.

La goulotte 13 est solidaire de la porte 1 et dirigée à sa partie supérieure vers l'intérieur de l'armoire en direction du poste de déchargement des frites cuites. La goulotte 13 est échancrée en 17 à son extrémité inférieure pour laisser passer le rebord circulaire supérieur du gobelet 10 tombant sur la plaque support 11.

Le dispositif de stockage, délivrance un à un des gobelets et de mise en place sur la plaque support 11 est tout à fait conventionnel et n'a pas besoin d'être décrit plus en détail.

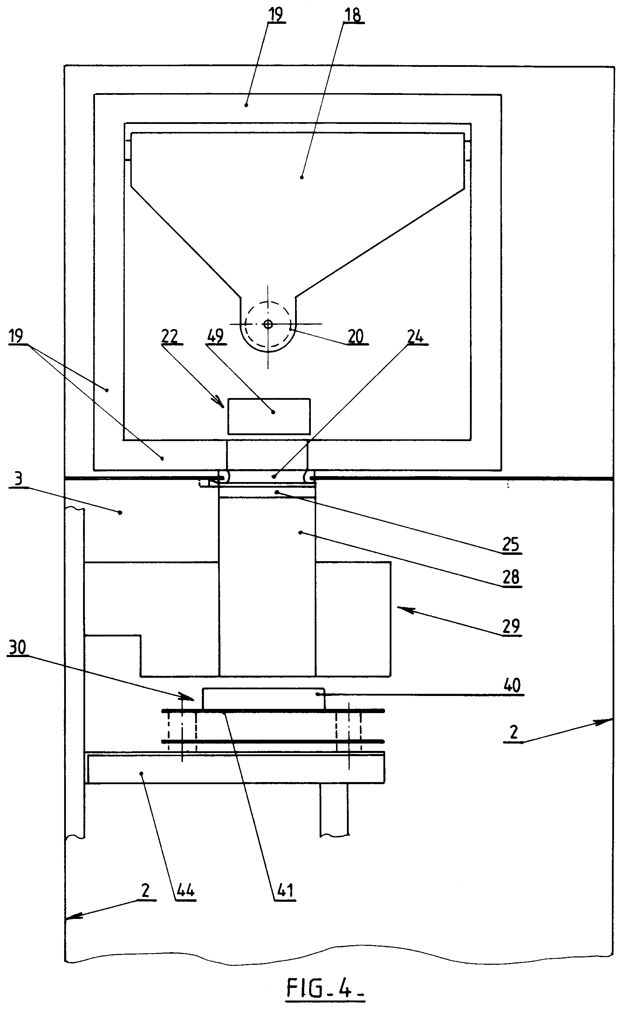

Dans l'armoire est disposé, en partie supérieure (figure 4), une trémie 18 de stockage de frites pré-cuites congelées. A cet effet, la trémie est enfermée dans une enceinte 19 isolée thermiquement et réfrigérée en sorte de maintenir à l'intérieur une température de l'ordre de -18°C.

A sa partie inférieure, la trémie 18 est munie d'une vis d'Archimède 20 horizontale, orthogonale au plan de la porte 1 en position fermée et mue par un moteur électrique 21. La vis 20 est chargée de prélever des frites dans la trémie 18 et de les envoyer dans un dispositif de pesée symbolisé en 22, chargé de constituer des portions de frites d'un poids prédéterminé.

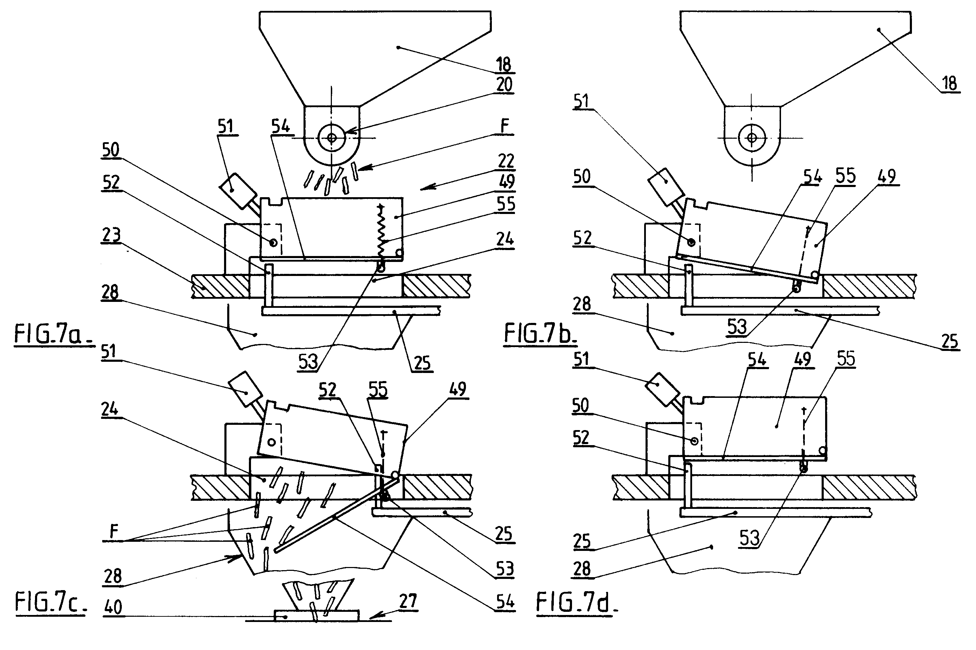

En dessous du dispositif de pesée 22 est ménagé, dans un plancher intermédiaire 23, un orifice 24 et une tringlerie horizontale 25, mobile sous l'action d'un dispositif de commande 26, actionne l'ouverture du fond du dispositif 22 en vue de transférer les frites du dispositif de pesée 22 vers un ensemble de cuisson 27, via une goulotte de guidage 28. Le dispositif de commande d'ouverture du fond du dispositif 22 sera décrit plus loin en référence aux figures 7a à 7d.

L'ensemble de cuisson 27 est mobile horizontalement et peut occuper trois positions : l'une (représentée en figure 2) où il est au poste de chargement, sous la goulotte 28, une deuxième où il se trouve sous un poste de cuisson 29 et une troisième, à l'opposé de la deuxième position par rapport à la première, où il se trouve à l'aplomb de la goulotte 13, c'est-à-dire au poste de déchargement des frites dans le gobelet 10 en place dans la zone de délivrance 16.

L'ensemble de cuisson 27 est solidaire d'un chariot 30 mobile en translation sur des glissières horizontales 31 sous l'action d'un plateau circulaire 32 d'axe vertical entraîné en rotation par un moteur électrique 33, une bielle de liaison 34 étant interposée entre le plateau 32 et le chariot 30.

Le poste de cuisson 29 comporte par exemple deux lampes halogènes ou analogues 35 équipées de réflecteurs 36, l'ensemble étant logé dans une hotte 37 d'évacuation des fumées, reliée par un conduit 38 à un bloc de filtrage-extraction 39 rejetant à l'extérieur de l'armoire l'air filtré.

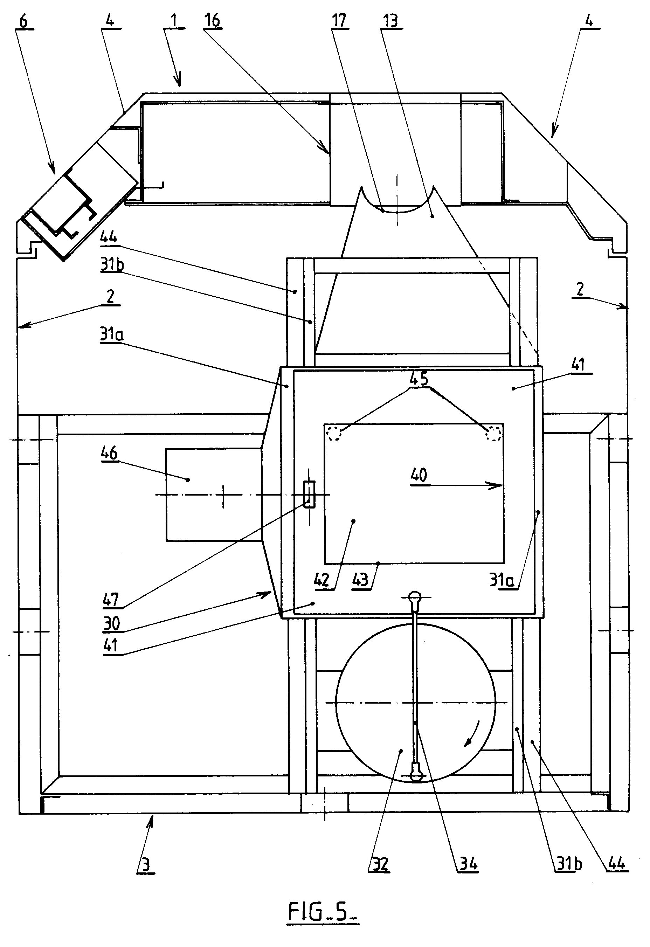

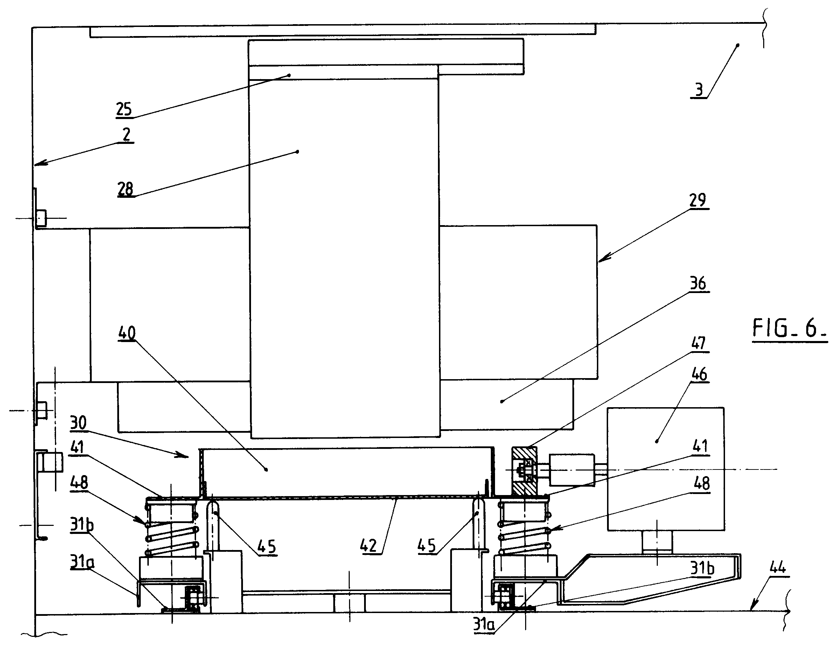

Sur les figures 5 et 6, on a représenté plus en détail l'ensemble de cuisson 27 porté par le chariot 30 et ses moyens d'entraînement.

Le chariot 30 est constitué d'un réceptacle rectangulaire 40 solidaire d'un plateau horizontal 41 et muni d'un fond 42 monté articulé autour d'un axe sensiblement confondu avec l'un des côtés (43, figure 5) du réceptacle 40.

L'ensemble 40-41-42 est porté par des glissières 31a coulissant sur des glissières fixes 31b portées par des supports horizontaux 44 (figures 2,5).

Le fond articulé 42 repose sur deux plots verticaux fixes 45 solidaires des supports 44.

En outre, l'ensemble de cuisson 27 est muni (figures 5 et 6) d'un dispositif vibrateur comportant un moteur électrique 46 solidaire des glissières mobiles 31a et entraînant une came excentrée 47 en contact avec le plateau 41, lequel repose élastiquement sur quatre ressorts hélicoïdaux verticaux 48 portés par les glissières 31a du chariot 30.

Le fonctionnement du dispositif décrit ci-dessus est le suivant.

Lorsque la somme correcte est introduite dans le monnayeur 6, le programmateur (non représenté) dont est muni l'appareil enclenche le début d'un cycle. La vis d'Archimède 20 est actionnée par le moteur 21 en sorte d'alimenter en frites pré-cuites et congelées F (figures 7a à 7d) le dispositif de pesée 22 qui est un dispositif à bascule comportant un bac 49 monté articulé autour d'un axe horizontal 50 et contre-balancé par un poids 51 réglable en position. Lorsque la quantité de frites F est suffisante pour faire basculer (figure 7b) le bac 49 autour de l'axe 50, ce qui correspond à la portion définie par le contre-poids 51, un micro-interrupteur de fin de course déclenche l'arrêt de la vis 20 et l'actionnement de la tringlerie 25 par le dispositif 26.

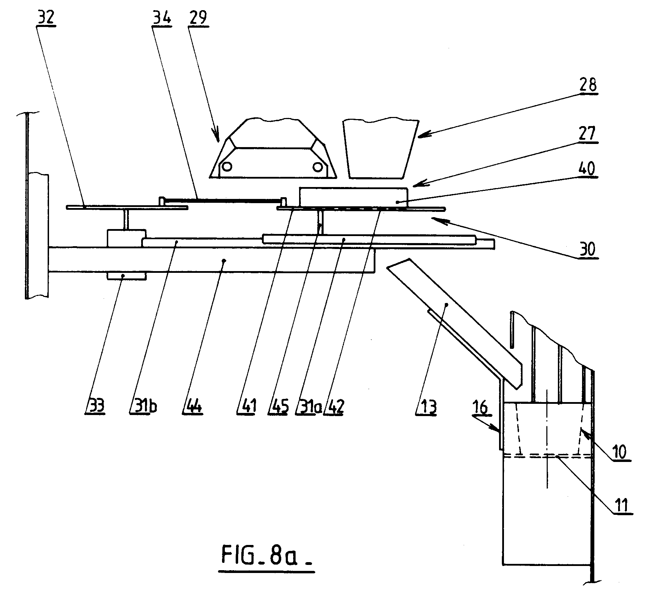

La tringlerie 25 se déplace en translation horizontale (figure 7c) et entraîne par un doigt vertical 52 agissant sur une saillie latérale 53 du fond 54 du bac 49, l'escamotage par pivotement dudit fond 54 autour de l'un des côtés du bac 49. Les frites F glissent alors sur le plan incliné du fond 54 qui s'abaisse dans l'orifice de passage 24 et tombent dans la goulotte 28, puis dans le réceptacle 40 de l'ensemble de cuisson 27. Ce dernier se trouve dans la position de chargement (figure 8a) sous la goulotte 28.

Au bout d'un temps prédéterminé, la tringlerie 25 est ramenée au point de départ (figure 7d) et le fond escamotable 49 revient en position initiale d'obturation du bac 49 sous l'action d'un ressort de rappel 55 interposé entre la saillie 53 et le bac 49.

Avantageusement, le programmateur peut commander la remise en route de la vis d'Archimède 20 pour remplir à nouveau le bac 49 en vue de la prochaine cuisson, le dispositif 22 demeurant alors dans la position de la figure 7d.

Le réglage de la position du contre-poids 51 par rapport au bac 49 permet de régler le poids de chaque portion définie par le dispositif 22.

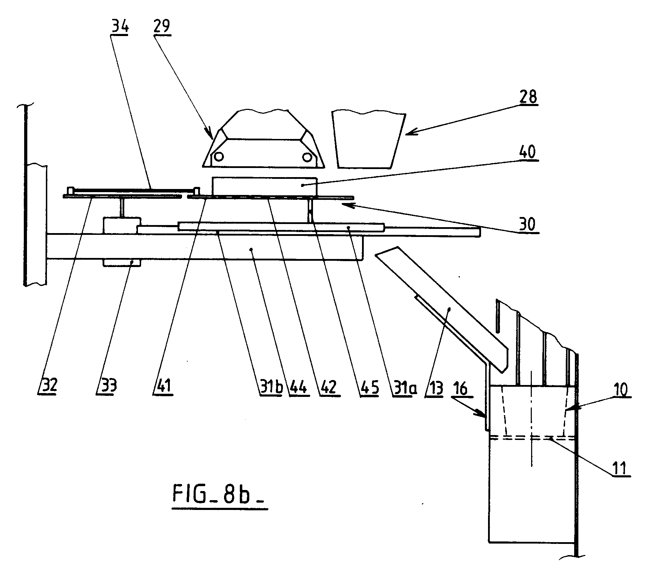

Une fois le réceptacle 40 de l'ensemble de cuisson 27 garni (figure 8a), le chariot 30 est amené, par rotation du plateau circulaire 32, au poste de cuisson 29 (figure 8b), le réceptacle 40 se trouvant sous les lampes halogènes dudit poste.

Le temps de cuisson est déterminé par le programmateur et peut être réglé.

Durant la cuisson, le dispositif vibrant 46,47 est actionné pour secouer l'ensemble 40,41,42 en sorte que les frites se déplacent et sautent sur le fond 42, assurant ainsi une cuisson homogène.

En outre, pendant la cuisson, le groupe d'extraction (37,38,39) rejette les fumées à l'extérieur après les avoir filtrées.

Dès la cuisson terminée, le programmateur actionne le moteur 15 de distribution des gobelets 10.

Un gobelet 10 de l'une des deux piles du magasin 14 est libéré et, guidé par les tringles 12, tombe en position d'attente au poste 16 sur la plaque 11, sous la goulotte 13.

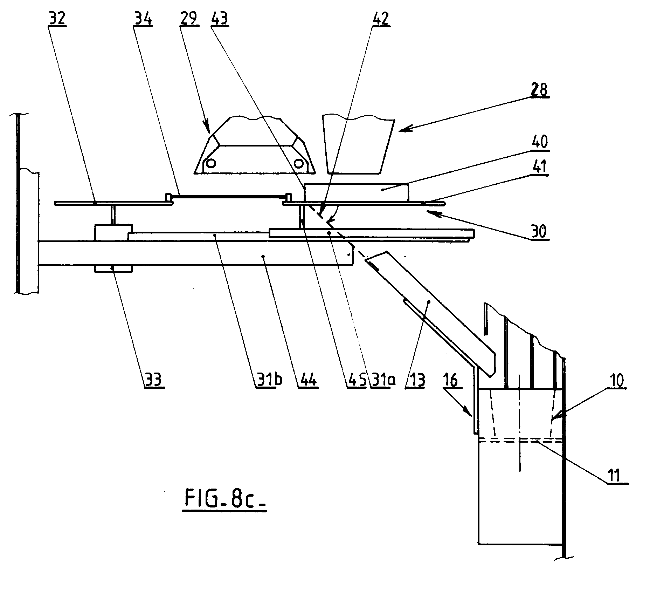

Puis, le chariot 30 est amené dans la troisième position, de déchargement (figure 8c). Durant ce déplacement, le fond 42 glisse sur les plots fixes 45 jusqu'à ce qu'il échappe à ces derniers et bascule sous son poids et celui des frites autour de son axe de rotation à hauteur du côté arrière 43 (figure 5) du réceptacle 40.

Le mouvement de bascule du fond 42 est stoppé par le bord supérieur de la goulotte 13. Les frites dégringolent dans le gobelet 10.

Durant leur déchargement, les frites sont toujours soumises à des vibrations par le dispositif 46,47 pour faciliter leur évacuation.

Enfin, le programmateur commande le retour du chariot 30 en position de chargement (figure 8a), dans l'attente d'un nouveau cycle. Au cours de ce retour, le fond 42 reprend appui sur les plots fixes 45 et sa place de fermeture du fond du réceptacle 40.

La trappe d'accès 9 est levée par un dispositif approprié (non représenté) commandé par le programmateur, par exemple dès que le monnayeur 6 est crédité de la somme correcte, puis rabaissée au bout d'un temps prédéterminé suffisant pour permettre l'enlèvement du gobelet 10 garni de frites et, éventuellement, d'accessoires et/ou condiments (fourchette, serviette, sel, moutarde, sauce, etc...), pré-conditionnés, stockés à l'intérieur de l'armoire et délivrés à chaque cycle de l'appareil, à côté du gobelet 10 au poste 16, ou à tout autre endroit de la façade de l'appareil, à l'aide d'un dispositif approprié conventionnel (non représenté sur les dessins).

Il est à noter que le système de cuisson des frites à lampes halogènes ou analogues et donc sans huile est beaucoup moins polluant et salissant que la friture à bain d'huile, ce qui rend l'appareil plus propre, plus fiable, car les mécanismes s'encrassent moins, plus facile d'entretien et assure des conditions d'hygiène et de sécurité beaucoup plus satisfaisantes pour le consommateur. Il n'y a pas en particulier un traitement, surveillance et renouvellement périodique de bain d'huile à assurer.

Enfin, l'invention n'est évidemment pas limitée au mode de réalisation représenté et décrit ci-dessus, mais en couvre au contraire toutes les variantes, notamment en ce qui concerne les moyens de pesée des portions de frites, les moyens de déplacement de l'ensemble de cuisson 27 entre les trois postes de chargement, cuisson et déchargement, les moyens de vidage du dispositif 27 après cuisson, ainsi que l'agencement de l'armoire ou enceinte de l'appareil, qui peut être une enceinte fixe, éventuellement encastrée dans une structure ou une paroi.

## Revendications

1. Appareil distributeur de frites à pré-paiement, constitué d'une enceinte (1, 2, 3) munie d'une trappe (9) d'accès à une zone (16) de délivrance d'un récipient (10) et dans laquelle sont agencés :
- une trémie (18) de stockage à température appropriée de frites pré-cuites congelées munie d'un dispositif (20,21) d'évacuation des frites hors de la trémie ;
- un dispositif (22) de pesage de portions déterminées de frites ;
- des moyens (25, 52 à 54) de transfert de la quantité pesée par ledit dispositif de pesage (22) en direction d'un ensemble de cuisson (27) ;
- une goulotte (13) acheminant les frites cuites depuis ledit ensemble de cuisson (27) jusqu'à ladite zone de délivrance (16) ;
- un dispositif de stockage-distribution un à un de récipients (10) à ladite zone de délivrance (16) ;
- un système monnayeur (6) de déclenchement d'un cycle de fonctionnement de l'appareil, et
- un dispositif de programmation activé par le monnayeur (6) et commandant, contrôlant et synchronisant les diverses étapes dudit cycle,
caractérisé en ce que
- d'une part, lesdits moyens de pesage (22) et de transfert des frites (F) vers ledit ensemble de cuisson (27) au poste de chargement, sont constitués par un bac (49) monté en bascule sous le rappel d'un contre-poids (51) réglable en position et par un montage escamotable du fond (54) dudit bac (49), commandé par un dispositif approprié (25, 26, 52, 53) à partir d'un signal fourni par un micro-interrupteur de fin de course de basculement dudit bac et,
- d'autre part, ledit ensemble de cuisson (27) est mobile en translation entre une première position de chargement des frites, une seconde position de cuisson en dessous d'un poste de cuisson (29) comportant une ou plusieurs lampes halogènes (35) ou analogues, équipées de réflecteurs (36) et une troisième position de déchargement des frites.

2. Appareil suivant la revendication 1, caractérisé en ce que le dispositif de commande du pivotement d'escamotage du fond (54) est constitué d'un doigt (52) actionné par une tringlerie (25) et sur la trajectoire duquel se trouve une saillie (53) solidaire dudit fond (54), ce dernier étant monté pivotant le long d'un des côtés du bac (49) et rappelé dans sa position initiale par un ressort (55).

3. Appareil suivant la revendication 1 à 2, caractérisé en ce que ledit ensemble de cuisson mobile (27) est constitué d'un chariot (30) coulissant horizontalement, constitué d'un plateau (41) portant un réceptacle (40) à fond ouvrant (42) dont l'ouverture est commandée lors du déplacement dudit chariot (30) dans ladite position de déchargement des frites.

4. Appareil suivant la revendication 3, caractérisé en ce que ledit fond (42) est monté pivotant au voisinage de l'un des côtés du réceptacle (40) et repose sur des plots fixes (45) en sorte que le coulissement dudit fond (42) sur lesdits plots fixes (45) entraîne, audit poste de déchargement, l'ouverture dudit fond (42) en direction de ladite goulotte (13) d'acheminement des frites vers ladite zone de délivrance (16).

5. Appareil suivant la revendication 3 ou 4, caractérisé en ce que ledit plateau (41) est soumis à des vibrations par un dispositif approprié (46,47,48) pendant la cuisson, et éventuellement, le déchargement des frites.

6. Appareil suivant la revendication 5, caractérisé en ce que le dispositif engendrant les vibrations est constitué d'une came excentrée (47) entraînée par un moteur porté par le chariot (30) et en contact avec ledit plateau (41), celui-ci étant monté élastiquement sur des glissières mobiles (31a) du chariot (30).

7. Appareil suivant l'une des revendications 1 à 6, caractérisé en ce que le poste de cuisson (29) comporte une hotte (37) de récupération des fumées, reliée par un conduit (38) à un dispositif (39) d'extraction et rejet à l'extérieur, après filtration, desdites fumées.

## Claims

1. Machine for distributing ships with prepayment, consisting of an enclosure (1, 2, 3) provided with an access flap (9) to a zone (16) for delivering a receptacle (10) and in which are arranged:
- a hopper (18) for storing, at a suitable temperature, pre-cooked frozen chips, provided with a device (20, 21) for discharging chips from the hopper;
- a device (22) for weighing given portions of chips;
- means (25, 52 to 54) for transferring the quantity weighed by the said weighing device (22) in the direction of a cooking unit (27);
- a chute (13) conveying the cooked chips from the said cooking unit (27) to the said delivery zone (16);
- a device for storing receptacles (10) and distributing them one by one to the said delivery zone (16);
- a coin-slot system (6) triggering an operating cycle of the machine, and
- a programming device activated by the coin slot (6) and controlling, monitoring and synchronising the various steps of the said cycle,
characterised in that
- on the one hand, the said weighing means (22) and means of transferring chips (F) to the said cooking unit (27) at the loading station consist of a tray (49) mounted so as to tilt under the return force of a counterweight (51) which is adjustable in position and by means of a retractable mounting of the base (54) of the said tray (49), controlled by a suitable device (25, 26, 52, 53), from a signal supplied by a microswitch for the end of tilting travel of the said tray, and
- on the other hand, the said cooking unit (27) is movable in translation between a first position for loading the chips, a second cooking position underneath a cooking station (29) including one or more halogen lamps (35) or similar, equipped with reflectors (36), and a third position of unloading the chips.

2. Machine according to Claim 1, characterised in that the device controlling the retracting pivoting of the base (54) consists of a finger (52) actuated by a linkage (25) and on the path of which there is a projection (53) integral with the said base (54), the latter being pivotally mounted along one of the sides of the tray (49) and returned to its initial position by a spring (55).

3. Machine according to Claims 1 to 2, characterised in that the said movable cooking unit (27) consists of a carriage (30) sliding horizontally, consisting of a plate (41) carrying a receptacle (40) with an opening base (42), the opening of which is actuated when the said carriage (30) moves into the said chip unloading position.

4. Machine according to Claim 3, characterised in that the said base (42) is pivotally mounted in the vicinity of one of the sides of the receptacle (40) and rests on fixed studs (45) so that the sliding of the said base (42) on the said fixed studs (45) leads , at the said unloading station, to the opening of the said base (42) in the direction of the said chute (13) conveying the chips to the said delivery zone (16).

5. Machine according to Claim 3 or 4, characterised in that the said plate (41) is subjected to vibrations by means of a suitable device (46, 47, 48) during the cooking and optionally the discharging of the chips.

6. Machine according to Claim 5, characterised in that the device generating the vibrations consists of an eccentric cam (47) driven by a motor carried by the carriage (30) and in contact with the said plate (41), the latter being elastically mounted on mobile runners (31a) of the carriage (30).

7. Machine according to one of Claims 1 to 6, characterised in that the cooking station (29) includes a hood (37) for recovering fumes, connected by a duct (38) to a device (39) for extracting the said fumes and discharging them to the outside after filtration.

## Patentansprüche

1. Durch Bezahlung aktivierbares Pommes-Frites-Abgabegerät, gebildet aus einem mit einer Zugangsklappe (9) in einem Abgabebereich (16) für einen Behälter (10) versehenen Gehäuse (1, 2, 3), in dem
- ein Trichter (18) zur Bevorratung von vorgegarten, gefrorenen Frites bei einer geeigneten Temperatur mit einer Entnahmevorrichtung (20, 21) von Frites aus dem Trichter (18),
- eine Vorrichtung (22) zum Abwiegen vorbestimmter Portionen von Frites,
- Mittel (25, 52 bis 54) zum Überführen der von besagter Vorrichtung (22) zum Abwiegen abgewogenen Portionen in Richtung zu einer Gareinheit (27),
- eine Schütte (13), die die gegarten Frites aus besagter Gareinheit (27) in besagten Abgabebereich (16) befördert,
- eine Aufnahme- und Abgabevorrichtung jeweils eines Behälters (10) in besagten Abgabebereich (16),
- ein monetäres System (6) zum Auslösen eines Funktionszyklus des Geräts und
- eine durch das monetäre System (6) aktivierte Steuervorrichtung, die die verschiedenen Schritte besagten Zyklus steuert, kontrolliert und synchronisiert,
angeordnet sind,
dadurch gekennzeichnet, daß
- einerseits besagte Mittel (22) zum Abwiegen und zum Überführen von Frites (F) zu besagter Gareinheit (27) im Beschickungsbereich durch einen Trog (49), der schwenkbar unter der Vorspannung eines in seiner Position einstellbaren Gegengewichts (51) montiert ist, und durch eine klappbare Montage des Bodens (54) besagten Trogs (49) gebildet werden, der durch eine geeignete Vorrichtung (25, 26, 52, 53) über ein Signal gesteuert wird, das von einem Mikroschalter am Ende des Schwenkhubs besagten Trogs geliefert wird, und
- andererseits besagte Gareinheit (27) zwischen einer ersten Beschickungsposition für Frites, einer zweiten Garposition unter einer Garstelle (29), die eine oder mehrere Halogenlampen (35) oder analoge Mittel umfaßt, die mit Reflektoren (36) ausgestattet sind, sowie einer dritten Abgabeposition translationsbeweglich ist.

2. Gerät nach Anspruch 1, dadurch gekennzeichnet, daß die Steuervorrichtung zum schwenkbaren Klappen des Bodens (54) durch einen Zapfen (52) gebildet wird, der durch ein Gestänge (25) betätigt wird und auf dessen Bewegungsbahn sich ein an besagtem Boden (54) befestigter Vorsprung (53) befindet, wobei der Boden (54) längs einer der Seiten des Trogs (49) schwenkbar montiert und durch eine Feder (55) in seiner Ausgangsstellung rückstellbar ist.

3. Gerät nach Anspruch 1 bis 2, dadurch gekennzeichnet, daß besagte mobile Gareinheit (27) durch einen horizontal geführten Schlitten (30) gebildet wird, der aus einer Platte (41) gebildet wird, die ein Aufnahmegefäß (40) mit beweglichem Boden (42) trägt, dessen Öffnung während der Verschiebung besagten Schlittens (30) in die Abgabeposition für Frites gesteuert wird.

4. Gerät nach Anspruch 3, dadurch gekennzeichnet, daß besagter Boden (42) schwenkbar benachbart zu einer der Seiten des Aufnahmegefäßes (40) montiert ist und auf feststehenden Stiften (45) derart ruht, daß die Verschiebung besagten Bodens (42) auf besagten feststehenden Stiften (45) an der Abgabestelle das Öffnen besagten Bodens (42) in Richtung zu besagter Schütte (13) zum Befördern von Frites zu besagtem Abgabebereich (16) bewirkt.

5. Gerät nach Anspruch 3 oder 4, dadurch gekennzeichnet, daß besagte Platte (41) durch eine geeignete Vorrichtung (46, 47, 48) während des Garens und gegebenenfalls der Abgabe von Frites Vibrationen unterworfen wird.

6. Gerät nach Anspruch 5, dadurch gekennzeichnet, daß die Vorrichtung, die die Vibrationen verursacht, durch einen exzentrischen Nocken (47) gebildet wird, der durch einen Motor, der von dem Schlitten (30) getragen wird, angetrieben wird und mit besagter Platte (41) in Kontakt steht, die elastisch auf beweglichen Gleitschienen (31a) des Schlittens (30) montiert ist.

7. Gerät nach einem der Ansprüche 1 bis 6, dadurch gekennzeichnet, daß die Kochstelle (29) einen Abzug (37) zur Aufnahme von Dünsten aufweist, der über eine Leitung (38) mit einer Vorrichtung (39) zum Abführen und Abgeben besagter Dünste nach Filtern in den Außenraum verbunden ist.
